# EUROPEAN PATENT APPLICATION

(11) **EP 1 496 657 A1**
(43) Date of publication of application: **12.01.2005**
(21) Application number: 04396045.9
(22) Date of filing: 07.07.2004
(51) Int. Cl.: H04L 12/58

(54) **A method and an apparatus for enhancing messaging**

(30) Priority: 11.07.2003 US 617601
(71) Applicant: Nokia Corporation, 02150 Espoo (FI)
(72) Inventor: Niemi, Aki, 00250 Helsinki (FI)
(74) Representative: Tanhua, Pekka Vilhelm

(57) **Abstract**

The invention concerns a method and an apparatus for enhancing delivery of information and accessibility of a receiver. In particular the invention concerns a method for establishing a communication comprising a step of transmitting a request (102, 201, 302) for establishing a communication by a communication terminal (101, 301), which request is handled by a server (103, 303). As a response to inability to establish the requested communications the server (103, 303) returns a failure response including rerouting details (104, 202, 307) to the communication terminal (101, 301). The communication terminal (101, 301) receives the failure response including rerouting details, and forwards data (203) according to the received rerouting details.

## Description

The invention concerns a method and an apparatus for enhancing delivery of information and accessibility of a receiver.

One way of exchanging messages with a friend or a co-worker is to establish an instant messaging (IM) session for real-time online "conversation". Instant messaging presupposes that parties to be connected are subscribers of the service and both are logged in the system, i.e. online at the same time. Additionally the intended recipient must be willing to engage in instant messaging communications. Instant messaging differs from ordinary e-mail in the immediacy of the message exchange. Usually the instant messaging system also provides an ability to easily see whether a chosen receiver is connected to the Internet at the moment, and whether the receiver is available. Most exchanges are text only, but some services allow also voice messaging and file sharing.

For initiating an interactive user session that involves multimedia elements, such as video, voice, chat, gaming or virtual reality, the Session Initiation Protocol (SIP) is used. SIP works in the application layer of the 7-layered Open Systems Interconnection (OSI), which is a standard description for how messages should be transmitted between any 2 points in a telecommunication network. The mentioned application layer is responsible for ensuring that communication is possible.

SIP can establish multimedia sessions or Internet telephony calls, and modify, or terminate those. The protocol can also invite participants to unicast or multicast sessions that do not necessarily involve the initiator. SIP is also capable of managing direct communications in the form of peer-to-peer messaging, where the SIP protocol infrastructure is used as a mechanism for transporting and routing the messages. SIP supports name mapping and redirection services, so it makes possible for users to initiate and receive communications and services from any location in the network, and also for networks to identify the users wherever they are.

SIP is a request-response protocol, dealing with requests from subscribers or clients, and responses from servers. All subscribers of the system are identified by SIP URLs (Uniform Resource Locator). SIP requests can be sent through any transport protocol, such as UDP (User Datagram Protocol), SCTP (Stream Control Transmission Protocol), or TCP (Transmission Control Protocol). SIP takes care of messaging and details related to it: SIP determines the end system to be used for the messages, and the communication media and media parameters. The called party's desire to engage in communications is requested in session establishment. Once the desire is assured, SIP establishes call parameters at both ends of the communication, and handles call setup, modification and termination.

One problem arising when using typical messaging arrangements is that the chosen recipient may not be accessible. This occurs if the recipient is not connected to the Internet, or if the recipient is not able or willing to engage in the requested messaging communication. Typically a failure response is returned to the client sending a request. After receiving the failure response, it is up to the client, whether he resends the messaging request after a while, or decides to choose some other way of communication. The decision to use an alternative communications currently assumes that the user has experience of other ways of communication with the other user, the user is able to use other communication means and the user has appropriate machinery for using them.

Another way to handle the situation of not being able to reach the chosen recipient using interactive messaging, is to use some automatic forwarding of messages. In the recipient's network there may be intelligent gateways and proxy servers that forward messages to other systems. This kind of forwarding, however, goes beyond the sender's control, leaving no control over the message delivery to the original sender of the message. This reduces transparency of the overall system, and may make functioning of a system unpredictable to a user, who is supposed to be responsible for messages that originate from his terminal.

An objective of the present invention is to make it possible to transmit and forward messages easily, transparently and user-friendly. A further objective of the present invention is to keep message delivery transparent to user. A yet further objective of the present invention is to enhance a delivery of information. A yet further objective of the present invention is to improve the accessibility of a receiver.

The objectives are attained so that when a requested communication for messaging cannot be established, a server handling the communication requests informs a sender of a request about rerouting possibilities for the message enabling a message to be directed to a different messaging system.

The invention is characterized by what is presented in the characterizing parts of the independent claims. Embodiments of the invention are presented in dependent claims.

The invention concerns a communicating system comprising a communication terminal for transmitting a request for establishing a communication, a server for handling the request, said server being adapted to respond to a communication establishment failure situation by returning a failure response including rerouting details, wherein the communication terminal is adapted to receive such a failure response including rerouting details and to forward data according to received rerouting details. The invention further concerns a method for establishing a communication, comprising steps of transmitting a request for establishing a communication by a communication terminal, handling the request by a server, returning a failure response including rerouting details as a response to inability to establish the requested communication by a server, receiving the failure response including rerouting details by the communication terminal, and forwarding data according to the received rerouting details.

Further the invention concerns a communication terminal for transmitting messages, comprising means for transmitting a request for establishing a communication, means for receiving a failure response having rerouting details including an alternative contact information as a response to inability to establish the requested communication, means for displaying the alternative contact information and means for confirming the forwarding of data according to the received rerouting details, and means for forwarding data according to the received rerouting details as a response to the confirmation. Yet further the invention concerns a server for handling request-response based communication, comprising means for fetching rerouting details including an alternative contact information of the requested recipient from a data storage storing alternative contact information of users, means for adding the rerouting details to the failure response, and as a response to inability to establish the requested communication, means for returning to the sender of the request the failure response including rerouting details. Additionally the invention concerns computer program products, comprising computer executable code means for performing the previously described steps, when executed on a computer.

The previously described background of the invention illustrates SIP protocol, which is a request-response protocol, dealing with requests from subscribers or clients, and responses from servers. However SIP is only one exemplary type of communication and the present invention may be implemented with any type of communication based on transmitting requests and responses.

According to an embodiment of the present invention the failure response includes a detailed URL (Uniform Resource Locator) and the communication terminal has means for receiving the failure response including detailed URL to another messaging system, and for forwarding data to the detailed URL.

According to another embodiment of the present invention the failure response includes a phone number of a requested receiver and the communication terminal has means for receiving the failure response including the phone number of a requested receiver, and for forwarding data to the received phone number through short message service centre by a short message service or a multimedia messaging service.

According to another embodiment of the present invention the failure response includes an electronic mail address and the communication terminal has means for receiving the failure response including an electronic mail address, and for forwarding data to the electronic mail address.

The present invention and its advantageous embodiments illustrate a user-friendly way to use different kind of messaging services. According to one embodiment of the present invention the alternative messaging services are not initially compatible. The use of different messaging services makes it easier for a sender to reach or access a chosen receiver without demanding specific actions from the receiver. According to an advantageous embodiment of the present invention the compatibility of different messaging systems is established so, that the user has control over the execution of interoperability functions or linking of different messaging systems. Still the user interaction is advantageously kept at a minimum, and the user may for example just accept the forwarding of data to a different messaging service. At least the sender has the knowledge of used routes, reroutes, links and gateways. This way functioning and interoperability of different systems is observable and transparent to users, but the forwarding of data can be implemented automatically. The server needs to attach some new contact information concerning some other messaging system to the failure response sent back to a sender of a SIP request. The communication terminal of the sender is then able to use this new contact information and redirect data according to the new contact information to other messaging system. The user need not have experience or knowledge of data transmitting details for other messaging systems.

Still the user is aware of the functioning and able to control the transmitting and delivery.

In the following the invention is described more closely, referring to the advantageous embodiments of the present invention presented by way of example and to the accompanying drawings in which
- Fig. 1: illustrates an arrangement according to an advantageous embodiment of the present invention,
- Fig. 2: illustrates transmitting of messages according to an advantageous embodiment of the present invention,
- Fig. 3: illustrates an arrangement according to an advantageous embodiment of the present invention,
- Fig. 4: illustrates a communication terminal according to an advantageous embodiment of the present invention, and
- Fig. 5: illustrates a server according to an advantageous embodiment of the present invention.

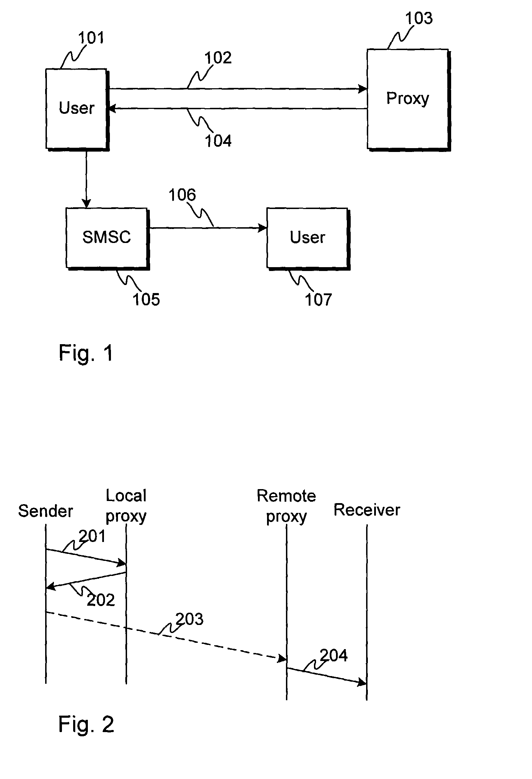

Figure 1 illustrates an advantageous embodiment of the present invention. A user sends by a user terminal 101 a SIP request 102 to a proxy-server 103. The user terminal 101 is also referred as a communication terminal. By the request 102 the user terminal 101 requests for establishing a messaging session to a chosen receiver, here user 107. The requested session can be an instant messaging session or a peer-to-peer connection. The proxy-server 103 handles the requests. The proxy-server 103 is not able to establish the requested SIP connection, if for example a chosen recipient is not logged in the system or willing to engage in the communication at the moment. The request 102 for establishing a communication is instant, and if the communication cannot be established at the moment, the proxy-server 103 sends back as a response a failure message 104 illustrating inability to establish the requested communication. According to an advantageous embodiment of the present invention the proxy-server 103 attaches to this message 104 some contact information concerning an alternative way to reach the chosen receiver 107. The receiver may be reached through some other communication terminal than the one for which the original request for establishing a communication session was meant. Typically the receiver is reached through the same communication terminal for which the original request for establishing a communication session was transmitted. The alternative service can be for example a short message service (SMS), multimedia messaging service (MMS), hypertext transfer protocol (HTTP), link to an email address or anything alike.

The failure response 104 including contact information according to an advantageous embodiment of the present invention is transmitted to the user terminal 101 originally requesting the establishing of an instant message connection. The user 101 is informed of the possibility to reach the chosen recipient 107 through some other service instead of failed instant messaging. According to one advantageous embodiment of the present invention the user 101 accepts the next used service by confirming the action, for example by pressing an OK-button. Typically the user 101 is at least informed and able to control the rerouting of data. The user 101 may for example choose a used way from multiple suggestions, terminate the rerouting, try another service than suggested by his terminal according to received contact information, or decide to resend the original SIP request after a period of time. According to an embodiment illustrated in figure 1, the user terminal 101 receives from the proxy-server 103 a failure response 104 including a phone number for the mobile terminal of the chosen recipient 107. The sender 101 may contact the chosen recipient 107 by transmitting data through short message service centre, SMSC 105, which transmits a message 106 further to the chosen user 107. The user 107 terminal may be the one originally reached or it may be some other terminal of the reached user.

At present many different messaging systems are available and also the messaging systems are commonly used. Messaging relates besides just fun and pleasure, also more and more to different business-related situations. Additionally messages are used for many informative purposes. Present messaging systems, such as e-mail, are verifiably indicated to be a useful and easy way of communication.

One simple and in Europe widely used messaging system is the SMS (short message service), which is implemented in global system for mobile (GSM) communications network. SMS-messages are typically plain text. They are transmitted through the network to a short message service centre (SMSC), which searches for a receiving terminal and transmits an SMS-message further to the receiving terminal. An SMS centre may transmit SMS-messages for example to a GSM device, to a computer, to a fax or to any device having ability to receive SMS-messages. If the receiver cannot be reached at the moment, the SMS centre holds up the SMS-message and tries to send it again later. An SMS-message may be stored for some predetermined time and a new sending may be triggered periodically or predetermined number of times. A receiver device cannot be reached if it is not connected to the network at the moment, or if it is in a shadow area not covered by the network.

A more advanced message type is a multimedia message, so called MMS-message, which may include besides the plain text also sound, video, pictures, movement of elements, and so on. The advanced MMS-messages are transmitted like the SMS-messages, i.e. through SMS centre. The recipients of these messages are identified by phone numbers, which in this application illustrates contact information of an alternative service attached by a server to a failure message.

Figure 2 illustrates transmitting of messages according to an advantageous embodiment of the present invention. The sender transmits a request for establishing a communication session 201 to a local proxy server handling these requests. If the local proxy server is unable to establish the requested communication, it gives a response by transmitting a message 202 including contact information of the chosen recipient through alternative messaging service. The local proxy server has the knowledge of subscribers and users logged in at the moment in order to be able to establish the requested communication. According to an advantageous embodiment of the present invention the local proxy server also has knowledge of contact information for contacting the recipients through alternative services. The alternative contact information is advantageously stored in a database or in other data recording form, which is easy, and fast to handle and operate with. The proxy server, or more commonly a server, and the functioning of it may be configured by the administrator of a server or a network, by the employer managing the server, or by the user. The one with authorization may change user profiles by changing the primary and secondary messaging services used in failure situations of communications. There might be many different ways to try to contact the recipient and advantageously the order for trying different contact ways is defined. According to an advantageous embodiment of the present invention it is also possible to attach multiple contact information to a failure response transmitted by a server.

According to the prior art systems the proxy server may have a routing information and intelligence to forward the request for example to another proxy server. This is usually confusing to users, especially to a sender, who may have no control over the redirecting or forwarding of messages originating from his terminal. According to an advantageous embodiment of the present invention the suggestion for another possibly usable communication service is transmitted back to the user as illustrated by an arrow 202. The user may accept just by confirming the use of the suggested alternative service. It is also possible to make the forwarding to the alternative service automatic, but at least the user has the knowledge of used routes and control over the operation. In the embodiment of figure 2 the local proxy sends back to the sender 202 an URL of a remote proxy server and the wanted data is then transmitted from sender to the remote proxy server. This transmission is illustrated by an arrow 203 in figure 2 and the transmission route may go through fixed cable, through air, through a gateway or through any other route for transmitting data. By used route the receiver may be reached and the data to be delivered is transmitted 204 to the receiver through the mentioned remote proxy server.

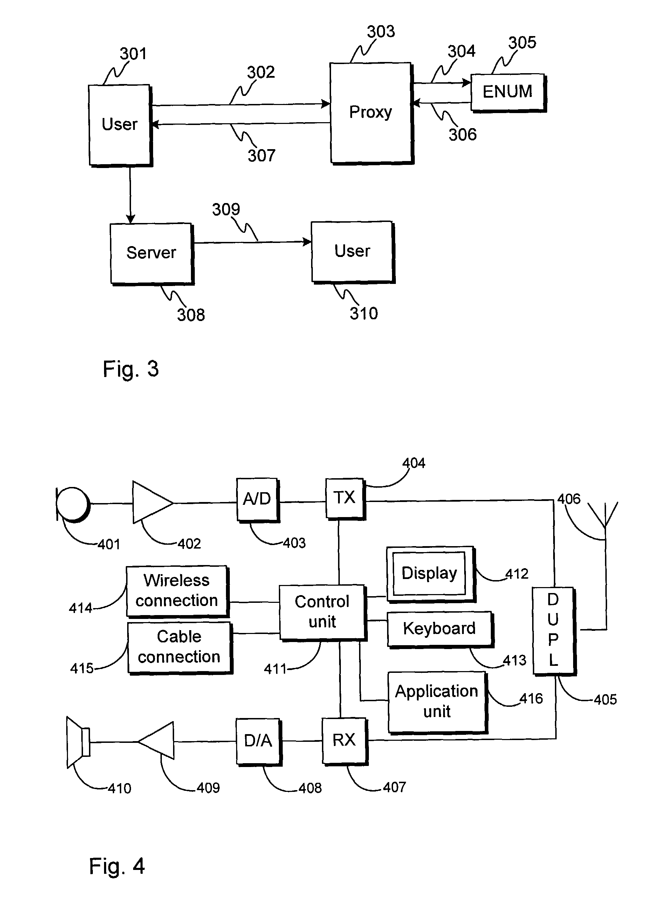

Figure 3 is an exemplary system according to an advantageous embodiment of the present invention. The user terminal 301 transmits a request 302 for establishing a SIP communication to a proxy 303 handling these requests. This request message 302 includes a phone number of a recipient and identification that the message is a SIP request. The server 303 transmits this message 302 by sending a query 304 to a unit 305 called ENUM. The ENUM unit 305 converts phone numbers into a SIP addresses typically by using a database. If the chosen recipient is not logged in to the system, the conversion cannot be made, and the ENUM unit 305 returns NULL 306 to the server 303. This is an indication to the server 303 that the conversion was prohibited, so it is not possible to establish the requested communication at the moment. The server 303 has a data structure, wherein there is stored contact information for alternative services for possible recipients. The recipients are known, because typically all chosen recipients are subscribers of the interactive messaging service, which is primarily tried to be used.

The server 303 attaches the alternative contact information or several alternative suggestions to the message 307 it transmits back to the user 301. The rerouting details, which include the alternative contact information, may be in the following form: contact<sms:phone number> or contact<mms:phone number> or contact<http:url address> or contact<mailto:email address>. The rerouting details are typically sent by so-called "380 Alternative Service"-type of SIP (version 2.0) message, or some other 300-series (such as 300, 3XX) SIP message. It is possible to add some contact information to these types of SIP messages. Also according to an advantageous embodiment of the present invention the user terminal 301 is able to receive and recognize these SIP messages, and further identify the new route and the contact information. Typically handling of the received messages is automatic in the user terminal 301. The steps of rerouting of a message can be implemented without user interaction. Typically confirmation is expected from the user.

According to the received, new contact information the user 301 is able with minimum or none interaction to reroute a message user 301 wants to deliver to a recipient. The contact information is an identifying address to some other messaging system. The contact information can be a mobile phone number or an URL of a chosen recipient. The message is then delivered according to the contact information for example to the SMS centre to a local area network (LAN), to a proxy-server or to a wap (wireless application protocol) server. Messages may be sent through cable, GSM network, data network or through some over the air (OTA) application. Messages may be transmitted between mobile phones, GSM-phones, faxes, computers, mobile devices and so on. The server 308 can be a proxy server of a local area network or a routing component through which the message is delivered to the recipient 310. The user terminal of the recipient 310 can be a mobile phone or a computer, an electronic mail service, the web site or some other device able to receive digital data.

A communication terminal, typically also called as a user terminal, according to an advantageous embodiment of the present invention is illustrated in figure 4. A communication terminal has means for receiving and transmitting data. Data can be sent through different routes. According to one embodiment data is delivered over the air. For over the air delivering a communication terminal includes a transceiver branch having a microphone 401, an amplifier 402, a converter 403 for converting analog signals to digital form and a transmitter unit 404. An antenna 406 and duplexer 405 are common to transceiver and receiver branches. A receiver branch has a receiver unit 407, a converter 408 for converting digital signals to analog form, an amplifier 409 and a loudspeaker 410. As another exemplary receiving and transmitting means a communication terminal might include a fixed cable connection 415, which typically connects a communication terminal to a server or to another terminal. A cable connection can be a permanent or a releasable connection. Yet another exemplary way to deliver data is to use a short-range wireless connection 414. Typically a communication terminal includes a panel as an access channel for short-range wireless connection 414, which is usually implemented by infrared- or bluetooth technique.

A communication terminal according to an embodiment illustrated in figure 4 further includes a display 412 for presenting data, a keyboard 413 for inputting data and a control unit 411, which controls and manages all the functions and actions in the communication terminal. An application unit 416 is responsible for handling the failure message including rerouting details according to an advantageous embodiment of the present invention. Typically the control unit 411 identifies a received failure message and transmits it to an application unit 416, which identifies rerouting details from the failure message. With the aid of control unit 411 and application unit 416 data is forwarded according to the received rerouting details.

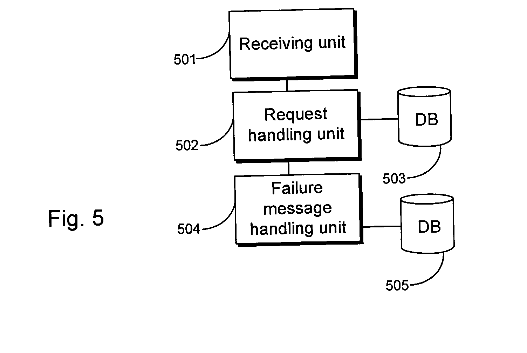

In figure 5 there is illustrated a server according to an advantageous embodiment of the present invention. A server includes a receiving unit 501, for receiving messages and checking if the received message is addressed to this specific server. If the receiving unit 501 founds out that the received message is not for meant for this server, the receiving unit 501 forwards the message further for example to next server in the network. If it is detected in the receiving unit 501 that message is intended to this server, the receiving unit 501 transmits certain received requests to certain units handling the requests in the server. A request handling unit 502 handles certain requests, for example SIP requests. A request handling unit 502 identifies a received SIP request, locates a requested recipient to be contacted through received SIP request and checks whether the requested recipient is on line. Typically there is some data storing unit like a database 503, from where a request handling unit 502 checks the users, so called subscribers, to be valid. Additionally a request handling unit 502 transmits a description of a requested session included in SIP request to recipient's proxy and waits for a response from the recipient. The response can then be an acceptation or a rejection of the requested communication.

The requested communication cannot be established, for example if a recipient is not a valid user, not on line at the moment, or not willing to engage in communication session. In these situations a respective failure message is advantageously transmitted to a failure message handling unit 504. A failure message handling unit 504 checks for alternative contact information for the requested recipient for example from a database 505. The database 505, or data storing unit used may include many different contact routes for a certain recipient.

According to one embodiment of the present invention there is defined the primary route used, so the contact information to be transmitted primarily. According to another embodiment several contact information are attached to a failure message in a predefined order. This has an advantage, that original sender of the communication establishing request may choose some other than primary contact information to be used, or at least the original sender is informed of multiple possible routes to reach the requested recipient.

A server can be a program code, situated in same or other device than a sender of a request. Sometimes the devices running server codes are called servers. Here a program code including different functional parts, units is referred as a server. Figure 5 illustrates only few functional units of a server according to an exemplary embodiment of the present invention. Depending on where a server is situated in relation to sender of the request and a requested recipient the server is accessed through typical ways, such as gateways, cable connections, over the air applications and so on.

In previous various embodiments of the present invention are illustrated with the accompanying drawings. The embodiments are illustrative for various implementations of the invention. It is to be understood that other embodiments may be utilized, and structural and functional modifications may be made without departing from the scope of the present invention.

## Claims

1. A communication system comprising a communication terminal (101, 301) for transmitting a request (102, 201, 302) for establishing communication, and a server (103, 303) for handling the request, **characterized in that** said server (103, 303) is adapted to respond to a communication establishment failure situation by returning a failure response (104, 202, 307) including rerouting details, and the communication terminal (101, 301) is adapted to receive such a failure response including rerouting details, and to forward data (203) according to the received rerouting details.

2. A communication system according to claim 1, **characterized in that** the failure response (104, 202, 307) has rerouting details including a detailed URL (Uniform Resource Locator) and the communication terminal (101, 301) has means for receiving the failure response including the detailed URL (Uniform Resource Locator) to another messaging system (406, 405, 407, 411, 414, 415) and for forwarding (405, 406, 411, 414, 415) data to the other messaging system according to the detailed URL.

3. A communication system according to claim 1, **characterized in that** the failure response (104, 202, 307) has rerouting details including a phone number of a requested receiver and the communication terminal (101, 301) has means for receiving the failure response including the phone number of the requested receiver (406, 405, 407, 411, 414, 415) and for forwarding data to the received phone number (405, 406, 411, 414, 415) through short message service centre by a short message service or a multimedia messaging service.

4. A communication system according to claim 1, **characterized in that** the failure response (104, 202, 307) has rerouting details including an electronic mail address and the communication terminal (101, 301) has means for receiving the failure response including the electronic mail address (406, 405, 407, 411, 414, 415), and for forwarding data (405, 406, 411, 414, 415) according to the electronic mail address.

5. A communication system according to claim 1, **characterized in that** the communication terminal (101, 301) further comprises means for confirming the forwarding of data according to the received rerouting details.

6. A communication system according to claim 1, **characterized in that** the server (103, 303) comprises means for fetching rerouting details including an alternative contact information of the requested recipient (504) from a data storage storing alternative contact information of users (505), means for adding the rerouting details to the failure response (104, 202, 307), and as a response to inability to establish the requested communication, means for returning to the sender of the request the failure response (104, 202, 307) including rerouting details.

7. A method for establishing a communication, comprising steps of:
- transmitting a request (102, 201, 302) for establishing a communication by a communication terminal (101, 301), and
- handling the request by a server (103, 303), **characterized in that** the method further comprises at least steps of:
- as a response to inability to establish the requested communication returning a failure response (104, 202, 307) including rerouting details by the server (103, 303),
- receiving by the communication terminal (101, 301) the failure response (104, 202, 307) including rerouting details, and
- forwarding data by the communication terminal (101, 301) according to the received rerouting details.

8. A method according to claim 7, **characterized in that** the request for establishing a communication (102, 201, 302) is a SIP (Session Initiation Protocol) message.

9. A method according to claim 7, **characterized in that** the rerouting details include a phone number, according to which data is forwarded to the short message service centre by the communication terminal (101, 301).

10. A method according to claim 7, **characterized in that** the rerouting details include a detailed Uniform Resource Locator (URL), according to which data is forwarded to the detailed URL by the communication terminal (101, 301).

11. A method according to claim 7, **characterized in that** the rerouting details include an electronic mail address, according to which data is forwarded to the electronic mail server (308) by the communication terminal (101, 301).

12. A method according to claim 7, **characterized in that** it further comprises the step of confirming the forwarding of data according to the received rerouting details in the communication terminal (101, 301).

13. A method according to claim 7, **characterized in that** handling the request by the server (103, 303) comprises fetching the rerouting details including an alternative contact information of a requested recipient from a data storage (505) storing alternative contact information of users, adding rerouting details to the failure response (504) and returning the failure response (104, 307) including rerouting details as a response to inability to establish the requested communication.

14. A communication terminal for transmitting messages, comprising means for transmitting a request for establishing a communication, **characterized in that** it comprises at least
- means for receiving a failure response (104, 202, 307) having rerouting details including an alternative contact information as a response to inability to establish the requested communication,
- means for displaying the alternative contact information and means for confirming forwarding of data according to the received rerouting details, and
- means for forwarding data (405, 406, 414, 415) according to the received rerouting details as a response to the confirmation.

15. A computer program product, **characterized in that** it comprises computer executable code means for performing at least steps of:
- transmitting by transmitting means (405, 406, 414, 415) a request for establishing a communication (104, 201, 302),
- as a response to inability to establish the requested communication receiving by receiving means (406, 405, 414, 415) a failure response (104, 202, 307) having rerouting details including an alternative contact information,
- displaying by display means the alternative contact information,
- requesting by the display means confirmation for forwarding of data according to the received rerouting details, and
- as a response to the confirmation, forwarding data according to the received rerouting details by transmitting means (405, 406, 414, 415),
when said product is executed on a computer.

16. A server for handling request-response based communication, **characterized in that** it comprises means for fetching rerouting details (504) including an alternative contact information of the requested recipient from a data storage (505) storing alternative contact information of users, means for adding the rerouting details to the failure response (504), and as a response to inability to establish the requested communication, means for returning to the sender of the request the failure response (104, 202, 307) including rerouting details.

17. A computer program product, **characterized in that** it comprises computer executable code means for performing at least steps of:
- fetching rerouting details (504) including an alternative contact information of the requested recipient from a data storage (505) storing alternative contact information of users,
- adding the rerouting details to the failure response (504), and
- as a response to inability to establish the requested communication, returning to the sender of the request (101, 301) the failure response (104, 202, 307) including rerouting details.
